# EUROPÄISCHE PATENTSCHRIFT

(11) **EP 1 093 768 B1**
(45) Veröffentlichungstag und Bekanntmachung des Hinweises auf die Patenterteilung: **04.10.2006**
(21) Anmeldenummer: 00122865.9
(22) Anmeldetag: 20.10.2000
(51) Int. Cl.: A61C 13/00, A61B 5/107

(54) **Verfahren und Vorrichtung zur Erfassung medizinischer Objekte, inbesondere von Modellen präparierter Zähne**
Method and device for imaging medical objects, in particular for dental models
Procédé et dispositif de prise d'empreinte optique d'objets médicaux, en particulier de modèles de dents

(30) Priorität: 21.10.1999 DE 19950780
(43) Veröffentlichungstag der Anmeldung: 25.04.2001
(73) Patentinhaber: Sirona Dental Systems GmbH, 64625 Bensheim (DE)
(72) Erfinder: Basler, Franz, 69514 Laudenbach (DE); Pfeiffer, Joachim, 64625 Bensheim (DE); Hasenzahl, Thomas, 64285 Darmstadt (DE); Schwotzer, Axel, 64521 Gross-Gerau (DE)
(74) Vertreter: Sommer, Peter

(56) Entgegenhaltungen:
- EP-A- 0 455 855
- DE-A- 19 504 126
- DE-U- 9 013 454
- US-A- 5 338 198
- US-A- 5 424 836
- US-A- 5 440 393

## Beschreibung

Die Erfindung betrifft eine Vorrichtung und ein Verfahren zur Erfassung von medizinischen präparierten Zähnen, insbesondere Zahnmodellen. Zahnmodelle zeichnen sich durch steile Wände und filigrane Strukturen aus, wobei schmale und tiefe Löcher enthalten sein können. Weiterhin besteht bei der Vermessung von Zahnmodellen die Notwendigkeit, Kanten und steile Flächen genau zu erfassen.

Aus der EP-A-0 455 855 ist die Vermessung eines Zahnmodells nach dem Triangulationsverfahren mit einem bestimmten, möglichst kleinen Paralaxenwinkel zwischen Projektions- und Beobachtungsstrahlengang bekannt. Das Modell wird während der Vermessung spiralförmig mit genügender Feinheit von einem ortsfest angeordneten Triangulationssensor abgescannt. Weiterhin ist bekannt, diese optische Meßeinrichtung auf einem der Werkzeugträgerköpfe zu montieren, so daß der Sensor über definierte Bewegungen in eine optimale Meßposition gebracht werden kann. Die Bewegungen der Werkzeugspindeln sind bekannt und können dem eigentlichen Sensormeßwert als Korrektur überlagert werden. Als Beispiel für den zu verwendenden Sensor wird ein Fokusdetektionssensor genannt, die Art der Gestaltung des Meßprozesses an sich bleibt offen.

Aus dem Prospekt "Dental CAD/CAM GN-I" der GC Corporation, Tokio, ist die Vermessung einer Zahnrestauration bekannt, bei der ein Lasersensor in einer 5-Achsen-Messung eine Zahnrestauration vermessen kann. Die Vermessungseinheit ist eigenständiger Bestandteil einer Maschinengruppe zur Erstellung von Zahnrestaurationen, die weiterhin eine eigenständige Schleifmaschine sowie einen Rechner zu Steuerung der Prozesse umfaßt.

Der Erfindung liegt die Aufgabe zugrunde, auf einfache Weise medizinische Objekte, insbesondere Modelle präparierter Zähne zu vermessen.

Gemäß der Erfindung nach Anspruch 1 wird eine Vorrichtung zur Erfassung von medizinischen. Objekten, insbesondere von Modellen präparierter Zähne, vorgeschlagen, umfassend einen in Projektionsrichtung bewegbaren positionsempfindlichen Sensor mit einer Projektions- und einer Empfängereinheit, wobei zwischen dem Projektionsstrahlengang der Projektionseinheit und dem Beobachtungsstrahlengang der Empfängereinheit ein bestimmter Triangulationswinkel vorhanden ist und wobei der Projektionsstrahlengang parallel zur Bewegungsrichtung des Sensors ausgerichtet ist. Dadurch, daß der Triangulationswinkel kleiner als 10°, vorzugsweise kleiner als 5° ist, kann in Zahnkavitäten hinreichend genau hinein gemessen werden, so daß Kanten und steile Flächen genau zu erfassen sind. Dadurch, daß die Empfängereinheit eine Zeile aus mehrere nebeneinanderliegenden und einzeln auswertbaren Pixeln aufweist, die mit einer Signalverarbeitung zusammenwirken, ist es möglich, Doppelreflexionen und Aufweitungen des Lichtflecks an Kanten bei der Bestimmung des Strahlschwerpunktes zu berücksichtigen und so die Nachteile der ansonsten weit verbreiteten Verwendung von positionsempfindlichen Sensoren (PSD = Position Sensitive Device) zu vermeiden. Vorteilhaft sind CCD oder Photo-Dioden, bei denen die Bestimmung des Strahlschwerpunktes auf die Verrechnung weniger Pixel beschränkt wird. Um Ausrichtungsfehler des Beobachtungsstrahlenganges auf die Zeile der Empfängereinheit ausgleichen zu können, ist in dem Beobachtungsstrahlengang ein Mittel zur Aufweitung des Strahls in einer zu der Zeile senkrechten Richtung angeordnet. Der Sensor ist dabei so in Projektionsrichtung bewegbar, daß er im Rahmen der Meßgenauigkeit bei der Bewegung in Projektionsrichtung den gleichen Objektpunkt vermißt. Werden in den Projektions- und/oder Beobachtungsstrahlengang Mittel zur Umlenkung des Strahlengangs angeordnet, so kann trotz des geringen Triangulationswinkels hinreichend Platz für die Anordnung der Projektions- und der Empfängereinheit geschaffen werden.

Auf Grund des in Projektionsrichtung bewegbaren Sensors ist es ausreichend, wenn der Meßbereich des Sensors höchstens ein Zehntel der größtmöglichen zu vermessenden Objektabmessung in Projektionsrichtung beträgt.

Vorteilhafterweise umfaßt die Projektionseinheit eine Laser-Diode mit Kollimatoroptik und eine Ansteuerung der Laser-Diode, wobei die Strahlungsleistung durch eine pulsbreitenmodulierte Ansteuerung (PWM), deren Tastverhältnis aus dem Signal des Empfängers berechnet wird, geregelt wird. Pulsbreitenmodulation bedeutet, daß die durchschnittliche Laserintensität durch das Zeitverhältnis zwischen angeschaltetem und ausgeschaltetem Laser eingestellt wird.

Die Kollimatoroptik besteht aus Linsen, die den Laserstrahl auf einen bestimmten Punkt fokussieren. Weiters ist eine Vorrichtung zur Erfassung medizinischer Objekte mit einem Sensor offenbart, wobei der Sensor in einem Gehäuse angeordnet ist und in dem Gehäuse ein Fenster für den Projektions-und/oder den Beobachtungsstrahlengang vorgesehen ist, wobei das Fenster auf eine höhere Temperatur als die Umgebungstemperatur gebracht ist.

Eine derartige Vorrichtung kann vorteilhafterweise innerhalb einer Schleifkammer einer Schleifmaschine auf einen Spindelmotor und in engen thermischen Kontakt mit diesem angeordnet sein. Durch den engen thermischen Kontakt mit dem Spindelmotor, der die Hauptwärmequelle während des Schleifprozesses ist, nimmt das Fenster weitgehend dessen Temperatur an, so daß selbst bei feuchtwarmen Bedingungen in der Kammer der Schleifmaschine ein Beschlagen des Fensters und damit eine Verfälschung der Messwerte des Sensors vermieden wird.

Durch die Verwendung von zwei Empfängereinheiten kann die Meßgenauigkeit insbesondere im Bereich der Vermessung von Kanten verbessert werden. Dabei werden die beiden Empfänger vorteilhafterweise spiegelsymmetrisch zum Projektionsstrahlengang angeordnet, so daß die asymmetrische Geometrie des Triangulationsverfahrens ausgeglichen wird. Bei den Empfängersignalen erhält das jeweils aussagekräftigere Signal, beispielsweise bezüglich einer höheren Intensität oder einem klareren Fokusbild das höhere Gewicht. Durch den zusätzlichen Beobachtungsstrahlengang läßt sich zwar die Kompaktheit nicht beibehalten, in besonderen Anwendungsfällen kann aber die verbesserte Vermessung Vorrang haben.

Ein weiterer Gegenstand der Erfindung ist ein Verfahren zum Vermessen von medizinischen Objekten, insbesondere von Zahnmodellen, nach Anspruch 5, wobei das Vermessen nach dem Triangulationsverfahren mit einem bestimmten Triangulationswinkel zwischen Projektions- und Beobachtungsstrahlengang erfolgt. Dadurch, daß ein Sensor in einem ersten Schritt mittels eines Antriebs in Projektionsrichtung so bewegt wird, daß das zu vermessende Objekt innerhalb eines zu einem Arbeitsabstand a gehörenden Bereichs +/-B gebracht wird, daß in einem zweiten Schritt der Sensor entlang des zu vermessenden Objekts bewegt wird, daß in einem dritten Schritt ein von dem Sensor erzeugtes Meßsignal darauf hin überprüft wird, ob es in dem Bereich +/- B zum Arbeitsabstand a liegt, daß in einem vierten Schritt die Position des Sensors bei Vorliegen eines Meßwert, außerhalb des Bereichs B so verändert wird, daß der Sensor im Bereich +/- B liegt, wobei vorzugsweise im wesentlichen der Arbeitsabstand a erreicht wird, und daß in einem fünften Schritt ein Meßwert erzeugt wird, wobei anschließend die Objektposition aus der Bewegung des Sensors und dem Meßwert des Sensors berechnet wird, ist es möglich, die Nachteile, die sich aus dem geringen Triangulationswinkel ergeben, auszugleichen. Obwohl eine Positionierung nach der Scheimpflug-Bedingung aus räumlichen Gründen nicht möglich ist und dadurch der Arbeitsbereich stark eingeschränkt wird, kann mit hinreichender Genauigkeit gemessen werden.

Vorteilhafterweise ist die Strahlungsleistung des Projektionsstrahls so geregelt, daß der Beobachtungsstrahl ein annähernd konstantes Signal erzeugt, insbesondere ist eine Laser-Diode so geregelt, daß die Amplitude des Signals auf einer Photo-Dioden-Zeile annähernd konstant ist.

Um die Meßgenauigkeit zu erhöhen, kann die auf eine Empfängereinheit treffende Intensität und/oder die Halbwertsbreite des von einer Projektionseinheit erzeugten Leuchtpunktes gemessen werden und eine Markierung des Meßwerts erfolgen, wenn die Intensität und/oder die Halbwertsbreite nicht in einem Normbereich liegen.

Gemäß einer vorteilhaften Weiterbildung werden die Meßwerte, die mit einem systematischen Fehler behaftet sind, als eventuell verfälscht markiert und von den späteren Auswerteroutinen entsprechend interpretiert. Dadurch wird vermieden, daß falsche Meßdaten in das Endresultat übertragen werden.

Zur Verbesserung der Meßgenauigkeit kann das Störlicht vor jeder eigentlichen Messung gemessen werden und bei der Bestimmung des Meßwertes kompensiert werden.

Vorteilhafterweise wird das Meßobjekt zunächst grob abgescannt und auf einem Ausgabegerät dargestellt, werden anschließend bestimmte Bereiche ausgewählt und wird die genaue Vermessung auf diese Bereiche eingeschränkt. Dies bedeutet einen erheblichen Zeitgewinn, da nicht das gesamte Meßobjekt aufgenommen werden muß. Weiterhin kann es vorteilhaft sein, wenn anhand der Grobmessung interaktive Schritte vorgenommen werden und dabei der eigentliche Meßvorgang im Hintergrund weiter läuft.

Ein Ausführungsbeispiel der erfindungsgemäßen Vorrichtung ist in der Zeichnung erläutert. Es zeigt die
- Fig. 1: einen innerhalb einer Schleifkammer einer Schleifmaschine angeordneten Sensor in schematischer Darstellung, die
- Fig. 2: ein Konstruktionsbeispiel für den Sensor der Vorrichtung gemäß Fig. 1, die
- Fig. 3: die Aufweitung des Beobachtungsstrahlengangs in Bereich des Empfängers und die
- Fig. 4: die Positionssteuerung des Sensors und die Unterdrückung von Störlicht in einer Schemazeichnung.

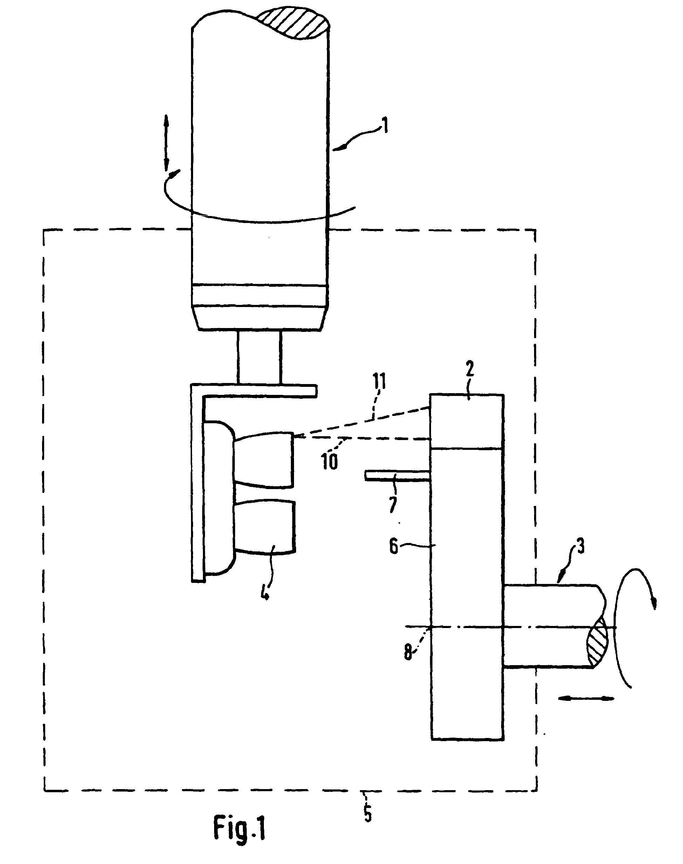

Die Fig. 1 zeigt in einer schaubildlichen Darstellung die Gesamtanordnung einer erfindungsgemäßen Vorrichtung in einer Ausführungsform zur Herstellung eines Zahnrestaurations-Paßkörpers. Die Vorrichtung umfaßt alle drei für die Herstellung des Paßkörpers wichtigen Komponenten, nämlich eine Aufnahmeeinrichtung 1, eine Vermessungseinrichtung (Sensor) 2 und eine Bearbeitungseinrichtung 3.

Die Aufnahmeeinrichtung 1 dient einerseits dazu, ein Modell von dem Paßkörper oder von dem Objekt, in das der Paßkörper später eingelegt werden soll und andererseits (alternativ) einen Werkstückrohling aus einem geeigneten Material, aus dem der Paßkörper erstellt werden soll, aufzunehmen. Das Modell kann ein Positiv- oder Negativmodell von dem Paßkörper bzw. von dem Objekt sein.

Die Vorrichtung ist mit einem Positiv-Modell eines präparierten Zahnobjekts 4 dargestellt. Die Aufnahmeeinrichtung 1 ermöglicht die Drehung und den Längsvorschub des Modells.

Die Vermessungseinrichtung (Sensor) 2 besteht im wesentlichen aus einer Lichtquelle, die einen scharfgebündelten, auf den in der Aufnahmeeinrichtung 1 gehalterten Gegenstand 4 ausrichtbaren Lichtstrahl 10 erzeugt, und einen optischen Empfänger, auf dem der von dem Lichtstrahl 10 auf dem Gegenstand projizierte Lichtfleck abgebildet wird, dargestellt durch den Projektionsstrahlengang 10 und den Beobachtungsstrahlengang 11.

Die Bearbeitungseinrichtung 3 besteht im wesentlichen aus einer Spindelanordnung, deren eines Ende in eine Bearbeitungskammer 5 ragt und dort einen Werkzeugträgerkopf 6 aufweist. Der Werkzeugträgerkopf 6 ist mit einem Werkzeug 7 bestückt und kann in Längsrichtung entlang der Achse 8 bewegt werden sowie um die Achse 8 gedreht werden, angedeutet durch die entsprechenden Pfeile.

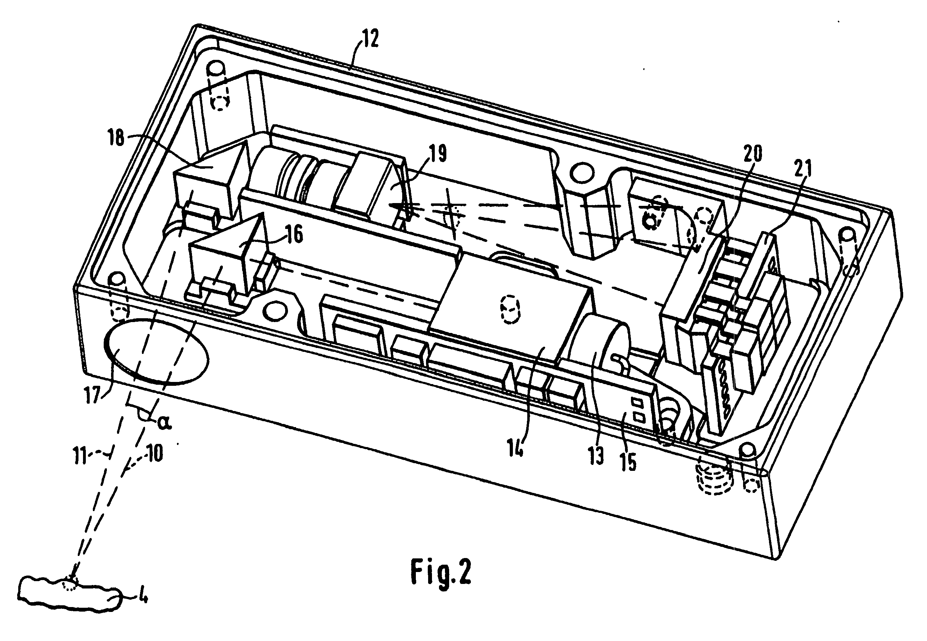

In Fig. 2 ist die Vermessungsvorrichtung (Sensor) mit den einzelnen Baugruppen als beispielhafte Konstruktion dargestellt. In einem Gehäuse 12 ist eine Laser-Diode 13 mit einer Kollimatoroptik 14 und eine Ansteuerung 15 untergebracht, die den Projektionsstrahlengang erzeugt und steuert.

In den Projektionsstrahlengang 10 ist ein Prisma 16 zur Umlenkung des aus der Laser-Diode 13 austretenden Strahls angeordnet, wodurch eine Umlenkung in einem rechten Winkel erfolgt. Der Laserstrahl verläßt das Gehäuse 12 über ein Fenster 17, durch welches auch der Beobachtungsstrahlengang 11 geführt wird. Dabei ist zwischen den Beobachtungsstrahlengang 11 und den Projektionsstrahlengang 10 ein Triangulationswinkel α eingeschlossen, der im dargestellten Fall 7° beträgt, vorzugsweise aber kleiner als 5° ist. Dieser Triangulationswinkel α bestimmt die zulässige Steilheit der Flanken von Kavitäten der Präparationen, die noch genügend genau gemessen werden können.

Das von dem Zahnobjekt 4 reflektierte Laserlicht wird über den Beobachtungsstrahlengang 11 durch das Fenster 17 in das Gehäuse 12 geführt und von einem Prisma 18 so umgelenkt, daß der Strahl in etwa parallel zu dem Projektionsstrahlengang verläuft.

In dem Beobachtungsstrahlengang 11 ist eine Zylinderlinse 19 angeordnet, die die Fokuslage in einer Ebene senkrecht zu der durch den die Beobachtungs- und den Projektionsstrahlengang aufgespannten Ebene verändert, so daß eine in dem Empfänger 20 vorhandene Zeile aus mehreren nebeneinanderliegenden und einzeln auswertbaren Pixeln mit Sicherheit im Bereich des Strahlkegels liegt.

Der Empfänger 20 ist mit einer Auswerteeinheit 21 versehen, in der die auf die Empfängereinheit auftreffende Intensität und die Halbwertsbreite des von der Projektionseinheit erzeugten Leuchtpunkts gemessen werden kann und mit welche die Strahlungsleistung der Projektionseinheit so geregelt ist, daß in der Empfängereinheit ein konstantes Signal auftritt, wobei die Laser-Diode so geregelt ist, daß die Amplitude des Signals in etwa konstant ist.

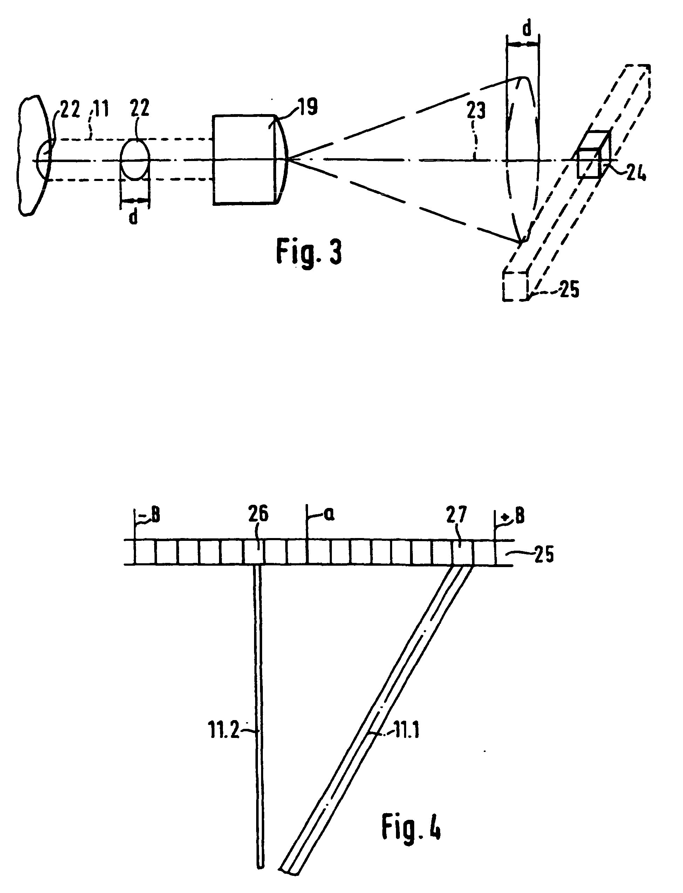

In Fig. 3 ist die Wirkung der Zylinderlinse 19 auf den wiedergegebenen Leuchtpunkt 22 schematisch dargestellt. Der Leuchtpunkt 22 mit einem Durchmesser d wird durch den Laserstrahl des Projektionsstrahlengang auf dem Zahnobjekt 4 erzeugt. Er wird durch die Linie 23 auf die Empfängerzeile 25 abgebildet. Durch die zusätzliche Verwendung der Zylinderlinse 19 wird eine Aufweitung in einer Richtung senkrecht zu der der Empfängerzeile 25 erreicht. Idealerweise bleibt dabei der Durchmesser parallel zur Empfängerzeile unverändert klein. Durch die Aufweitung wird vermieden, daß das Pixel 24 durch den Leuchtpunkt 22 bei leichter Dejustage nicht getroffen wird.

Aus Fig. 4 wird die Arbeitsweise der Empfängerzeile 25 mit verschiedenen Pixeln deutlich, die nebeneinander angeordnet sind. Auf die Empfängerzeile 25 trifft ein Hauptstrahl 11.1 und ein Nebenstrahl 11.2, der beispielsweise durch Reflexion an einer Kante des Zahnobjekts 4 erzeugt wird. Bei der Auswertung des Meßsignals ist es nun möglich, den Meßwert des Pixels 26 zu unterdrücken, und ausschließlich den Meßwert des Pixels 27 und gegebenenfalls der Nachbarn zu berücksichtigen, um so Verfälschungen auszuschließen.

Weiterhin läßt sich aus Fig. 4 verdeutlichen, daß eine Bewegung des Sensors zu dem Objekt hin oder von diesem weg dann erfolgt, wenn der Beobachtungsstrahlengang 11 in einen zuvor festgelegten äußeren Bereich der Empfängerzeile 25 gelangt, um sicherzustellen, daß die Meßsignale des nächsten Schritts noch innerhalb des Arbeitsabstands a beziehungsweise des Bereichs +/- B liegen, welche auf der Empfängerzeile 25 ihre Entsprechung in bestimmten Pixelbereichen finden, angegeben durch a, +B und -B.

## Patentansprüche

1. Vorrichtung zur Erfassung von medizinischen Objekten, insbesondere von Modellen präparierter Zähne, umfassend einen in Projektionsrichtung bewegbaren positionsempfindlichen Sensor (2) mit einer Projektions- und einer Empfängereinheit (13-15; 18-21), wobei zwischen dem Projektionsstrahlengang (10) der Projektionseinheit (13-15) und dem Beobachtungsstrahlengang (11) der Empfängereinheit (18-21) ein bestimmter Triangulationswinkel (α) vorhanden ist, wobei die Empfängereinheit (18-21) eine Zeile (25) aus mehreren nebeneinanderliegenden und einzeln auswertbaren Pixeln (24,26,27) aufweist, die mit einer Signalverarbeitung (21) zusammenwirken und wobei der Projektionsstrahlengang (10) parallel zur Bewegungsrichtung des Sensor (2) ausgerichtet ist, **dadurch gekennzeichnet, daß** der Triangulationswinkel (α) kleiner als 10°, vorzugsweise kleiner als 5°, ist, und daß in den Beobachtungsstrahlengang (11) Mittel (19) zur Aufweitung des Strahls in einer zu der Empfängerzeile (25) senkrechten Richtung angeordnet sind.

2. Vorrichtung nach Anspruch 1, **dadurch gekennzeichnet, daß** in dem Projektions- und/oder Beobachtungsstrahlengang (10,11) Mittel (16,18) zur Umlenkung des Strahlengangs angeordnet sind.

3. Vorrichtung nach einem der Ansprüche 1 oder 2, **dadurch gekennzeichnet, daß** der Meßbereich des Sensors (2) höchstens ein Zehntel der größtmöglichen zu vermessenden Objektabmessung in Projektionsrichtung (8) beträgt.

4. Vorrichtung nach einem der Ansprüche 1 bis 3, **dadurch gekennzeichnet, daß** die Projektionseinheit (13-15) eine Laser-Diode (13) mit Kollimatoroptik (14) und eine Ansteuerung (15) der Laser-Diode umfaßt, wobei insbesondere die Strahlungsleistung durch eine PWM-Ansteuerung, deren Tastverhältnis aus dem Signal des Empfängers berechnet wird, geregelt wird.

5. Verfahren zum Vermessen von medizinischen Präparationen, insbesondere von Zahnmodellen, für eine Vorrichtung zur Erfassung von Modellen präparierter Zähne, umfassend einen in Projektionsrichtung bewegbaren positionsempfindlichen Sensor (2) mit einer Projektions- und einer Empfängereinheit (13-15; 18-21), wobei zwischen dem Projektionsstrahlengang (10) der Projektionseinheit (13-15) und dem Beobachtungsstrahlengang (11) der Empfängereinheit (18-21) ein bestimmter Triangulationswinkel (α) vorhanden ist und wobei der Projektionsstrahlengang (10) parallel zur Bewegungsrichtung des Sensor (2) ausgerichtet ist,
**dadurch gekennzeichnet, dass** ein Sensor (2) in einem ersten Schritt mittels eines Antriebs in Projektionsrichtung (8) so bewegt wird, **dass** der Beobachtungsstrahlengang (11) des zu vermessenden Objekts (4) innerhalb eines zu einem Arbeitsabstand (a) gehörenden Bereichs (+/-B) einer Pixel-Zeile (24-27) der Signalverarbeitung (21) gebracht wird, dass in einem zweiten Schritt der Sensor (2) entlang des zu vermessenden Objekts (4) bewegt wird, dass in einem dritten Schritt der Beobachtungsstrahlengang (11) des zu vermessenden Objekts (4) daraufhin überprüft wird, ob das erzeugte Messsignal in dem Bereich (+/- B) der Zeile (25) liegt, dass in einem vierten Schritt die Position des Sensors bei Vorliegen eines Messsignals außerhalb des Bereichs (+/- B) so verändert wird, **dass** im wesentlichen der Arbeitsabstand (a) erreicht wird und **dass** in einem fünften Schritt ein Messwert erzeugt wird, wobei anschließend die Objektposition aus der Position des Sensors (2) und dem Messwert des Sensors (2) berechnet wird.

6. Verfahren nach Anspruch 5, **dadurch gekennzeichnet, daß** die Strahlungsleistung des Projektionsstrahls (10) so geregelt ist, daß der Beobachtungsstrahl (11) ein annähernd konstantes Signal erzeugt, insbesondere, daß eine Laser-Diode so geregelt ist, daß die Amplitude des Signals auf einer Photo-Dioden-Zeile annähernd konstant ist.

7. Verfahren nach einem der Ansprüche 5 oder 6, **dadurch gekennzeichnet, daß** die auf die eine Empfängereinheit (20,21) treffende Intensität und/oder Halbwertsbreite des Leuchtpunkts (22) gemessen wird und daß eine Markierung des Meßwerts erfolgt, wenn die Intensität und/oder die Halbwertsbreite nicht in einem Normbereich liegen.

8. Verfahren nach einem der Ansprüche 5 bis 7, **dadurch gekennzeichnet, daß** Meßwerte, die mit einem systematischen Fehler behaftet sind, als eventuell verfälscht markiert werden und von den späteren Auswerteroutinen entsprechend interpretiert werden.

9. Verfahren nach einem der Ansprüche 5 bis 8, **dadurch gekennzeichnet, daß** vor jeder Messung das Störlicht gemessen wird und daß das Störlicht bei der Bestimmung des Meßwertes kompensiert wird.

10. Verfahren nach einem der Ansprüche 5 bis 9, **dadurch gekennzeichnet, daß** das Meßobjekt (4) zunächst grob abgescannt und auf einem Ausgabegerät dargestellt wird, daß anschließend bestimmte Bereiche ausgewählt werden und daß die genaue Vermessung auf diese Bereiche eingeschränkt wird.

11. Verfahren nach Anspruch 10, **dadurch gekennzeichnet, daß** anhand der auf einem Ausgabegerät dargestellten Grobdarstellung interaktive Schritte zur Bestimmung der Form des Restaurationskörpers durchgeführt werden und daß die eigentliche Messung im Hintergrund weiter läuft und stetig verfeinerte Meßresultate erzeugt.

## Claims

1. Device for recording medicinal objects, in particular models of prepared teeth, comprising a position-sensitive sensor (2) mobile in a projection direction with a projection and receiver unit (13-15; 18-21), wherein there is a particular triangulation angle (α) between the projection beam path (10) of the projection unit (13-15) and the observation beam path (11) of the receiver unit (18-21), wherein the receiver unit (18-21) has a line (25) made up of a plurality of adjacent and individually evaluatable pixels (24, 26, 27), which interact with signal processing means (21) and wherein the projection beam path (10) is aligned parallel to the motion direction of the sensor (2), **characterized in that** the triangulation angle (α) is less than 10°, preferably less than 5°, and **in that** means (19) for expanding the beam in a direction perpendicular to the receiver row (25) are arranged in the observation beam path (11).

2. Device according to Claim 1, **characterized in that** means (16, 18) for deviating the beam are arranged in the projection and/or observation beam path (10, 11).

3. Device according to one of Claims 1 and 2, **characterized in that** the measurement range of the sensor (2) is at most one tenth of the greatest possible object dimension to be measured in the projection direction (8).

4. Device according to one of Claims 1 to 3, **characterized in that** the projection unit (13-15) comprises a laser diode (13) with collimator optics (14) and a control (15) of the laser diode, the radiation power in particular being regulated by PWM control, the duty ratio of which is calculated from the signal of the receiver.

5. Method for measuring medicinal preparations, in particular tooth models, for a device for recording models of prepared teeth, comprising a position-sensitive sensor (2) mobile in a projection direction with a projection and receiver unit (13-15; 18-21), wherein there is a particular triangulation angle (α) between the projection beam path (10) of the projection unit (13-15) and the observation beam path (11) of the receiver unit (18-21), and wherein the projection beam path (10) is aligned parallel to the motion direction of the sensor (2), **characterized in that** a sensor (2) is moved in a first step in the projection direction (8) by means of a drive so that the observation beam path (11) of the object (4) to be measured is brought within a range (+/- B), associated with a working distance (a), of a pixel row (24-27) of the signal processing (21), **in that** the sensor (2) is moved in a second step along the object (4) to be measured, **in that** the observation beam path (11) of the object (4) to be measured is checked in a third step for whether the generated measurement signal lies in the range (+/- B) of the row (25), **in that** the position of the sensor is altered in a fourth step in the event of a measurement signal lying outside the range (+/- B) so that essentially the working distance (a) is reached, and **in that** a measurement value is generated in a fifth step, the object position subsequently being calculated from the position of the sensor (2) and the measurement value of the sensor (2).

6. Method according to Claim 5, **characterized in that** the radiation power of the projection beam (10) is regulated so that the observation beam (11) generates an approximately constant signal, particularly **in that** a laser diode is regulated so that the amplitude of the signal on a photodiode row is approximately constant.

7. Method according to one of Claims 5 and 6, **characterized in that** the intensity arriving on a receiver unit (20, 21) and/or the width at half maximum of the light point (22) is measured, and **in that** the measurement value is marked if the intensity and/or the width at half maximum do not lie in a standard range.

8. Method according to one of Claims 5 to 7, **characterized in that** measurement values which are at affected by a systematic error are marked as possibly vitiated and are interpreted accordingly by the subsequent evaluation routine.

9. Method according to one of Claims 5 to 8, **characterized in that** the stray light is measured before each measurement, and **in that** the stray light is compensated for when determining the measurement value.

10. Method according to one of Claims 5 to 9, **characterized in that** the measurement object (4) is first scanned coarsely and represented on an output instrument, **in that** particular regions are subsequently selected, and **in that** the accurate measurement is restricted to these regions.

11. Method according to Claim 10, **characterized in that** interactive steps for determining the shape of the restoration body are carried out with the aid of the course representation represented on an output instrument, and **in that** the actual measurement continues in the background and constantly generates refined measurement results.

## Revendications

1. Dispositif d'acquisition d'objets médicaux, notamment de modèles de dents préparées, comprenant un capteur (2) sensible à la position pouvant être déplacé dans le sens de la projection comprenant une unité de projection et de réception (13-15 ; 18-21), un angle de triangulation (α) donné existant entre le trajet du rayon de projection (10) de l'unité de projection (13-15) et le trajet du rayon d'observation (11) de l'unité de réception (18-21), l'unité de réception (18-21) présentant une ligne (25) de plusieurs pixels (24, 26, 27) disposés les uns à côté des autres et pouvant être interprétés individuellement, lesquels interagissent avec un dispositif de traitement du signal (21), et le trajet du rayon de projection (10) étant dirigé parallèlement au sens de déplacement du capteur (2), **caractérisé en ce que** l'angle de triangulation (α) est inférieur à 10°, de préférence inférieur à 5° et que dans le trajet du rayon d'observation (11) sont disposés des moyens (19) pour élargir le rayon dans une direction perpendiculaire à la ligne du récepteur (25).

2. Dispositif selon la revendication 1, **caractérisé en ce que** des moyens (16, 18) de déviation du trajet du rayon sont disposés dans le trajet du rayon de projection et/ou d'observation (10, 11).

3. Dispositif selon l'une des revendications 1 ou 2, **caractérisé en ce que** la plage de mesure du capteur (2) est égale au maximum à un dixième de la plus grande dimension possible à mesurer de l'objet dans le sens de la projection (8).

4. Dispositif selon l'une des revendications 1 ou 3, **caractérisé en ce que** l'unité de projection (13-15) comprend une diode laser (13) munie d'une optique de collimation (14) et un dispositif de commande (15) de la diode laser, la puissance du rayonnement notamment étant régulée par une commande par modulation de la durée d'impulsion dont le rapport cyclique est calculé à partir du signal du récepteur.

5. Procédé de mesurage de préparations médicales, notamment de modèles de dents pour un dispositif d'acquisition de modèles de dents préparées, comprenant un capteur (2) sensible à la position pouvant être déplacé dans le sens de la projection comprenant une unité de projection et de réception (13-15 ; 18-21), un angle de triangulation (α) donné existant entre le trajet du rayon de projection (10) de l'unité de projection (13-15) et le trajet du rayon d'observation (11) de l'unité de réception (18-21) et le trajet du rayon de projection (10) étant dirigé parallèlement au sens de déplacement du capteur (2), **caractérisé en ce que** dans une première étape, un capteur (2) est déplacé dans le sens de la projection (8) au moyen d'un mécanisme d'entraînement de telle sorte que le trajet du rayon d'observation (11) de l'objet à mesurer (4) est amené à l'intérieur d'une zone (+/-B) d'une ligne de pixels (24-27) du dispositif de traitement du signal (21) faisant partie d'une distance de travail (a), que dans une deuxième étape, le capteur (2) est déplacé le long de l'objet à mesurer (4), que dans une troisième étape, le trajet du rayon d'observation (11) de l'objet à mesurer (4) est soumis à un contrôle pour vérifier si le signal de mesure généré se trouve dans la plage (+/B) de la ligne (25), que dans une quatrième étape, la position du capteur, en présence d'un signal de mesure en-dehors de la plage (+/-B), est modifiée de telle sorte que la distance de travail (a) est quasiment atteinte et que dans une cinquième étape, une valeur mesurée est produite, la position de l'objet étant ensuite calculée à partir de la position du capteur (2) et de la valeur mesurée du capteur (2).

6. Procédé selon la revendication 5, **caractérisé en ce que** la puissance du rayonnement du trajet du rayon de projection (10) est régulée de telle sorte que le trajet du rayon d'observation (11) génère un signal quasiment constant, notamment qu'une diode laser est régulée de telle sorte que l'amplitude du signal sur une ligne de photodiodes est quasiment constante.

7. Procédé selon l'une des revendications 5 ou 6, **caractérisé en ce que** l'intensité et/ou la largeur de valeur moyenne du point lumineux (22) venant frapper une unité de réception (20, 21) est mesurée et qu'un marquage de la valeur mesurée a lieu si l'intensité et/ou la largeur de la valeur moyenne ne se trouvent pas dans une plage normalisée.

8. Procédé selon l'une des revendications 5 à 7, **caractérisé en ce que** les valeurs mesurées qui sont atteintes d'une erreur systématique sont marquées comme étant éventuellement erronées et sont interprétées en conséquence par les routines d'interprétation ultérieures.

9. Procédé selon l'une des revendications 5 à 8, **caractérisé en ce que** la lumière parasite est mesurée avant chaque mesure et que la lumière parasite est compensée lors de la détermination de la valeur mesurée.

10. Procédé selon l'une des revendications 5 à 9, **caractérisé en ce que** l'objet mesuré (4) est tout d'abord balayé grossièrement puis représenté sur un appareil de sortie, que des zones spécifiques sont ensuite sélectionnées et que le mesurage précis est limité à ces zones.

11. Procédé selon la revendication 10, **caractérisé en ce que** des étapes interactives destinées à déterminer la forme du corps de restauration sont exécutées au moyen de la représentation grossière représentée sur l'appareil de sortie et que la mesure définitive se poursuit en arrière-plan et produit continuellement des résultats de mesure plus précis.
